# EUROPEAN PATENT SPECIFICATION

(11) **EP 3 678 211 B1**
(45) Date of publication and mention of the grant of the patent: **27.09.2023**
(21) Application number: 18852670.1
(22) Date of filing: 03.08.2018
(51) Int. Cl.: H01M 50/213, H01M 50/503, H01M 50/522, H01M 50/509, H01M 50/50, H01M 50/583

(54) **BATTERY PACK AND METHOD FOR MANUFACTURING SAME**
BATTERIEPACK UND VERFAHREN ZUR HERSTELLUNG DAVON
BLOC-BATTERIE ET SON PROCÉDÉ DE FABRICATION

(30) Priority: 29.08.2017 JP 2017164665
(43) Date of publication of application: 08.07.2020
(73) Proprietor: Panasonic Energy Co., Ltd., Osaka 570-8511 (JP)
(72) Inventor: TAKATSU, Takao, Osaka 540-6207 (JP); INAOKA, Osamu, Osaka 540-6207 (JP); TAKEDA, Kensaku, Osaka 540-6207 (JP)
(74) Representative: Vigand, Philippe
(86) International application number: PCT/JP2018/029196
(87) International publication number: WO 2019/044378

(56) References cited:
- WO-A1-2014/156001
- JP-A- 2004 265 610
- JP-A- 2005 011 629
- JP-A- 2007 273 179
- JP-A- 2012 506 108
- JP-A- 2016 066 455
- US-A1- 2015 263 317
- US-A1- 2015 263 317
- US-A1- 2016 141 573

## Description

### TECHNICAL FIELD

The present invention relates to a battery pack that includes a plurality of batteries connected in series and parallel via lead plates, and a method for manufacturing the battery pack. In particular, the present invention relates to a battery pack including a turned-back lead plate having, at each of its sides, fixed pieces that are connected respectively to electrode terminals, and a method for manufacturing that battery pack.

### BACKGROUND ART

In a battery pack which has been developed, a lead plate includes a turnback part that is bent, and fixed pieces connecting respectively with ends of the turnback part, and the fixed pieces are connected to respective electrode terminals of batteries.

### Citation List

### Patent Literature

PTL 1: Unexamined Japanese Patent Publication No. 2011-216366. US2015/263317A1, JP 2005011629 A, and US 2016/141573 A1 represent prior art literature relevant to the present disclosure.

### SUMMARY OF THE INVENTION

### Technical problems

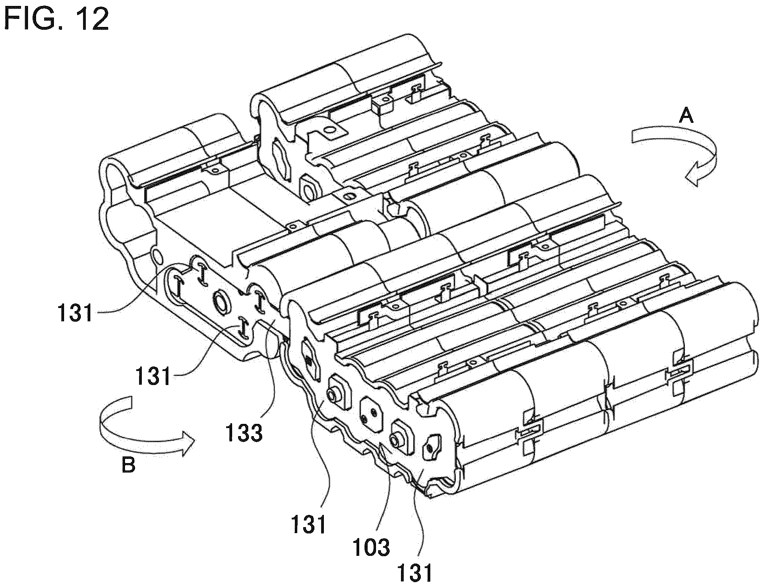

A battery pack in which batteries have their respective electrode terminals in face-to-face relation can be manufactured efficiently by welding fixed pieces 131 positioned at respective ends of lead plate 103 to the batteries' electrode terminals that are disposed on an identical plane with lead plate 103 being still flat as illustrated in FIG. 12 and thereafter bending lead plate 103 so that intermediate turnback part 133 is turned back. The lead plate used in the battery pack having the above structure may be shaped to include, although not illustrated, a connective arm connecting the fixed piece to the turnback part. The connective arm is a slender linear part having a narrower width and is used, for example, as a fuse link that is thermally cut by overcurrent or as a current sensing resistor with increased electrical resistance.

When the lead plate of this shape is bent in a bending process so that the turnback part positioned between the end-side fixed pieces is turned back at 180 degrees, internal stress is caused. The internal stress that is caused to the lead plate by the turnback can cause the narrower connective arm to break on impact.

The present invention has been made to solve such a conventional problem, and one object of the present invention is to provide a battery pack that has such superior impact strength as to prevent a slender connective arm from breaking on impact, and a method for manufacturing this battery pack. Solution to problem and advantageous effect of invention

The present invention is directed to a battery pack as described in the appended independent claim 1. The battery pack includes a plurality of batteries 1 including their respective electrode terminals 1x, 1y disposed in face-to-face relation, and lead plate 3 connecting each of the plurality of batteries 1. Lead plate 3 includes turnback part 33 and fixed piece 31 connected to electrode terminal 1x, 1y. Lead plate 3 also includes flat part 32 at each of ends of turnback part 33, and connective arm 34 that has a narrower width than fixed piece 31 and connects flat part 32 and fixed piece 31. Turnback part 33 includes bending part 37. Bending part 37 includes any one of through hole 37A provided in turnback part 33, side notch 37B where turnback part 33 has a narrowed width, and thinned part 37C that is a thinned part of turnback part 33.

In the above structure, the bending part provided to the turnback part of the lead plate includes any one of the through hole provided in the turnback part, the side notch where the turnback part has the narrower width, and the thinned part, which is the thinned part of the turnback part. Therefore, when the lead plate undergoes bending, the turnback part has an intentionally specified location for bending to take place, thus reducing reaction force that is caused by the bending of the lead plate. In this way, the slender connective arm can be effectively prevented from breaking on impact.

In the battery pack according to the present invention, lead plate 3 includes first flat part 32A that connects as one of flat parts 32 with one of the ends of turnback part 33, and second flat part 32B that connects as another of flat parts 32 with another of the ends of turnback part 33. First flat part 32A is connected via connective arm 34 to first fixed piece 31A of a plurality of the fixed pieces, and second flat part 32B is connected to second fixed piece 31B of the plurality of the fixed pieces without use of connective arm 34. Bending part 37 is provided along a boundary between turnback part 33 and first flat part 32A.

In the battery pack according to the present invention, sides of first flat part 32A are each connected to first fixed piece 31A via connective arm 34, and sides of second flat part 32B are each connected to second fixed piece 31B without the use of connective arm 34.

In the battery pack according to the present invention, connective arm 34 includes first end 34A connecting with first fixed piece 31A, and second end 34B connecting with first flat part 32A. Second end 33B connecting with first flat part 32A is distant from turnback part 33 compared with first end 34A, with connective arm 34 paralleling the sides of first flat part 32A.

In the battery pack according to the present invention, connective arm 34 may be a fuse link.

Another aspect of the present invention is directed to a method for manufacturing a battery pack as described in the appended claims.

### BRIEF DESCRIPTION OF DRAWINGS

FIG. 1 is a perspective view of a battery pack according to an exemplary embodiment of the present invention.
FIG. 2 is a sectional view of the battery pack, the section being taken along line II-II in FIG. 1.
FIG. 3 is an exploded perspective view of the FIG. 1 battery pack.
FIG. 4 is an exploded perspective view of a battery core pack, as viewed from below.
FIG. 5 is a developed view of a lead plate having a turnback part.
FIG. 6 is a perspective view illustrating a process of assembling the FIG. 4 core pack of the battery pack.
FIG. 7 is a perspective view illustrating a process of assembling the core pack.
FIG. 8 is a bottom perspective view illustrating a process of assembling the core pack.
FIG. 9 illustrates, in developed view, the lead plate having the turnback part in another example.
FIG. 10 is a bottom perspective view illustrating the lead plate having the turnback part in another example.
FIG. 11 illustrates, in bottom perspective view, the lead plate having the turnback part in another example.
FIG. 12 is a perspective view illustrating a process of assembling a core pack of a conventional battery pack.

### DESCRIPTION OF EMBODIMENT

An exemplary embodiment of the present invention is hereinafter described with reference to the drawings. It is to be noted, however, that the exemplary embodiment described below is an illustration embodying a technical idea of the present invention, and the present invention is not specifically limited to the following exemplary embodiment. Elements recited in the claims are not specifically limited to those members described in the exemplary embodiment. Unless otherwise specified, particulars including dimensions, materials, shapes, and relative positions of the members described in the exemplary embodiment are described as being mere examples and not as being restrictive of the present invention. The sizes, the relative positions, and others of the members may be illustrated exaggeratedly in the drawings for clear explanation. Those members that are identical or of the same quality have the same name and the same reference mark in the following description, and detailed descriptions of those members are omitted where appropriate. A single member may be configured to serve as a plurality of elements of the present invention. On the other hand, a function of a single element of the present invention may be achieved by a plurality of members. Contents described in some examples or exemplary embodiments can be used, for example, in other examples or exemplary embodiments.

A battery pack according to the present invention can be used mainly as a power source of an electric device that is used indoors or outdoors, such as a cleaner, a lighting device, a digital camera, or a video camera. The battery pack according to the present invention, however, has uses that are not particularly limited and can also be used, for example, as a power source of a device that is driven by an electric motor, such as an electric tool, an electric assist bicycle, an electric bike, an electric wheelchair, an electric tricycle, or an electric cart.

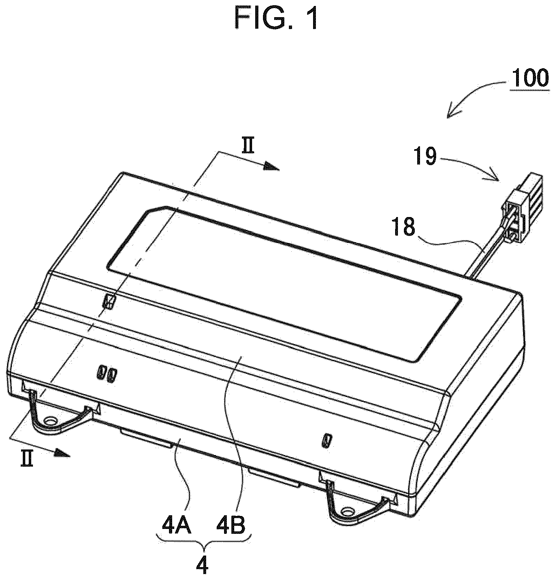

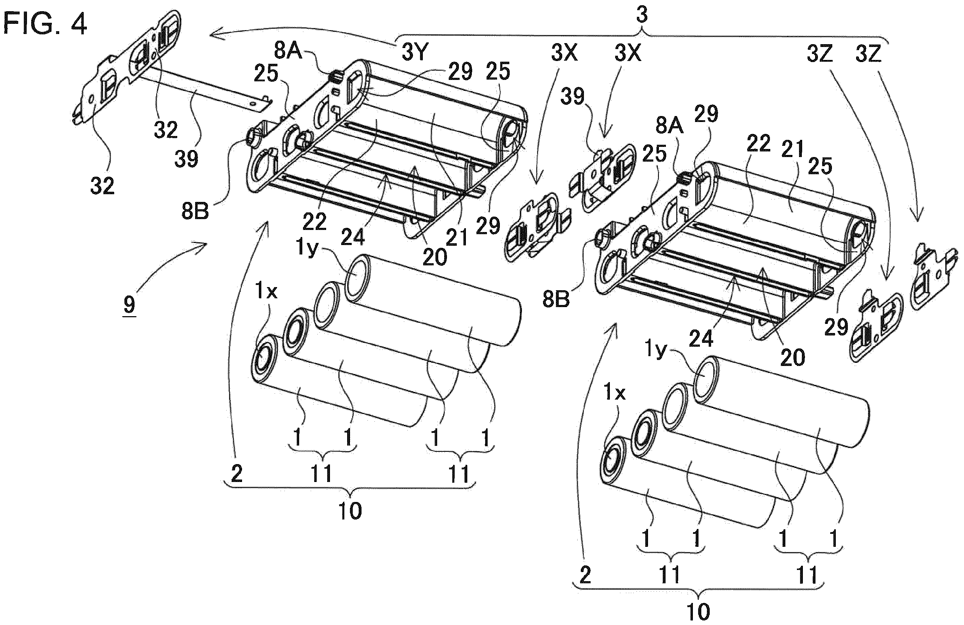

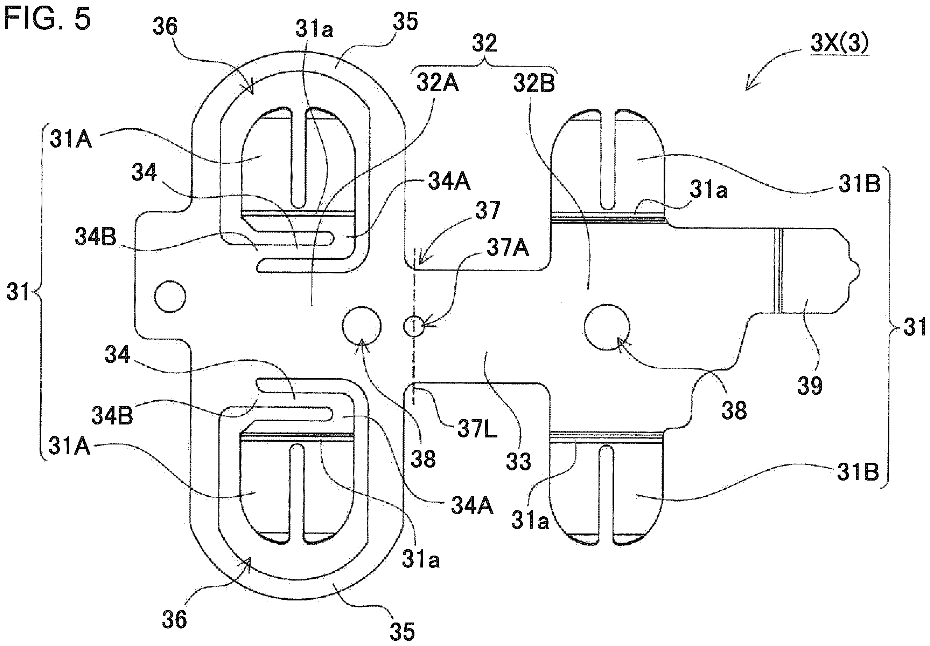

FIGS. 1, 2, and 3 are respectively a perspective view, a sectional view, and an exploded perspective view of battery pack 100 that includes a plurality of batteries 1 that can charge and discharge. The plurality of batteries 1 are connected via lead plates 3. As illustrated in FIG. 4 (an exploded perspective view) and FIG. 5 (a developed view), lead plates 3 include lead plate 3 which includes turnback (=fold) part 33 occupying an intermediate position between fixed pieces 31 that are each connected to electrode terminal 1x, 1y of battery 1. Batteries 1 disposed to have their respective electrode terminals 1x, 1y in face-to-face relation are connected to each other via this lead plate 3. In battery pack 100, the plurality of batteries 1 are each disposed in place by means of battery holder 2 and each have their positive and negative electrode terminals 1x, 1y connected by lead plates 3, thus forming battery core pack 9. Core pack 9 is housed into position in exterior case 4. A vertical direction and a side-to-side direction described in this specification correspond respectively to those directions defined in FIG. 1. A longitudinal direction of the battery is defined as a lengthwise direction.

### (Battery 1)

Batteries 1 of illustrated battery pack 100 are cylindrical batteries. An exterior can of each of the cylindrical batteries is cylindrical, houses an electrode assembly, is filled with an electrolyte and has an opening sealed with a seal plate. Positioned respectively at end faces of the cylindrical battery, a bottom face of the exterior can and an electrode projection provided in a center of the seal plate serve as negative electrode terminal 1y and positive electrode terminal 1x, respectively. Although each of batteries 1 of the illustrated battery pack is the cylindrical battery, the battery is not limited specifically to that cylindrical battery in the present invention and may be, for example, a prismatic battery. The battery is a non-aqueous electrolyte secondary battery such as a lithium-ion battery. However, the battery to use is not limited specifically to the lithium-ion battery in the present invention and may even be any other secondary battery that is currently available, such as any other non-aqueous electrolyte secondary battery or a nickel metal hydride battery, or any secondary battery that is to be developed.

### (Battery holder 2)

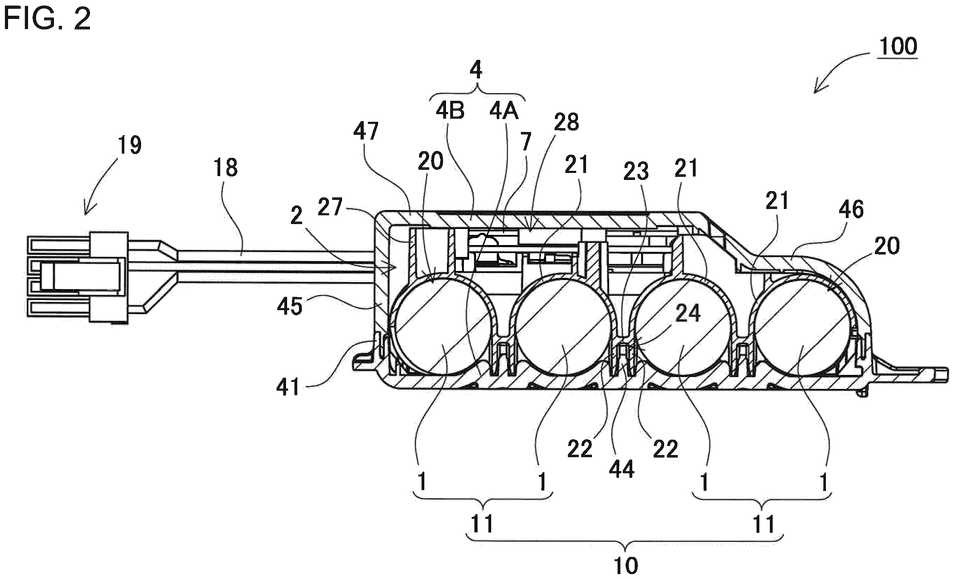

Each of the plurality of batteries 1 are disposed in place by means of battery holder 2. As illustrated in FIGS. 2 and 4, battery holder 2 includes a plurality of battery storage spaces 20 so that the plurality of batteries 1 are set into position. To have four of the cylindrical batteries, battery holder 2 of battery pack 100 includes, as illustrated in FIG. 2, four groove-shaped battery storage spaces 20 paralleling one another. Thus the four cylindrical batteries are disposed respectively in battery storage spaces 20 of battery holder 2 to parallel one another.

Each of battery storage spaces 20 of battery holder 2 is groove-shaped so that the cylindrical battery can be set into position. In FIG. 2, each battery storage space 20 of illustrated battery holder 2 has its bottom defined by curved plates 21 that are each semi-cylindrical to have a curved surface along an outer peripheral surface of the cylindrical battery. Provided between adjacent batteries 1 are partition walls 22 separating adjacent batteries 1. These partition walls 22 each extend downward from a side edge of curved plate 21, face each other between adjacent batteries 1 and are connected by connective part 23. Formed between respective lower ends of mutually facing partition walls 22 in FIG. 2 battery holder 2 is connection groove 24 that allows insertion of connection ridge 44 which projects from a bottom of first case 4A of exterior case 4. This battery holder 2 is connected in place to first case 4A when connection ridges 44 are inserted respectively in connection grooves 24 that are each formed between partition walls 22. Because adjacent batteries 1 are separated, thermal runaway is prevented.

In each of battery holders 2 illustrated in FIG. 4, each of the plurality of battery storage spaces 20 is closed by end wall 25 at each of its ends. End wall 25 includes electrode windows 29 that are each open to expose electrode terminal 1x, 1y positioned at each of ends of battery 1 housed in battery storage space 20. Each of electrode windows 29 is smaller than an outline of battery 1 to prevent passage of battery 1. The plurality of batteries 1 disposed to parallel one another in battery holder 2 have, at each of end faces of each battery 1, their respective electrode terminals 1x, 1y on an identical plane. Electrode terminals 1x, 1y exposed respectively by electrode windows 29 at each of end faces of battery holder 2 are connected by lead plates 3.

Battery holder 2 is made by molding an insulating resin such as a thermoplastic resin into a predetermined shape. Battery holder 2 may be made preferably of a resin having superior flame retardancy. Available examples of such a resin include polycarbonate (PC) and polypropylene (PP).

In above battery holder 2, the plurality of batteries 1 are horizontally arranged in parallel relation to one other on an identical plane. However, the battery holder is not necessarily limited to the structure in which the plurality of batteries are arranged in parallel relation to one another on the identical plane and may be a structure in which the plurality of batteries are arranged in rows and layers while paralleling one another. Although not illustrated, a battery holder having the plurality of batteries arranged in rows and layers may be shaped so that the plurality of cylindrical batteries are disposed to form staggered stacks or may be shaped so that the plurality of cylindrical batteries are arranged vertically and horizontally with each of the cylindrical batteries being at an intersection point of a checkboard pattern. When forming the staggered stacks in the battery holder, the plurality of cylindrical batteries are disposed in an efficiently improved space, so that the battery holder can be compact as a whole. Even each of these battery holders may be provided with partition walls that are each positioned, as a holder extending along the outer peripheral surface of the battery, between the cylindrical batteries arranged in rows and layers.

### (Core pack 9)

As illustrated in FIG. 4, each battery holder 2 of battery pack 100 houses four batteries 1 to form battery block 10, and two battery blocks 10 are connected in the lengthwise direction of each battery 1 to form battery core pack 9. Each of illustrated battery blocks 10 has two parallel units 11 that are each composed of two adjacent batteries 1 which are connected in parallel. Connecting two battery blocks 10 with their respective end faces facing each other, lead plates 3 connect four parallel units 11 in series. Therefore, connection of eight batteries 1 is such that four parallel units 11 are connected in series, and two batteries 1 are connected in parallel. This core pack 9 increases output current by including two batteries 1 connected in series and increases output voltage by having four parallel units 11 connected in series. In cases where, for example, batteries 1 to use are lithium-ion secondary batteries with 3.6 V per cell, a 14.4 V output can be obtained from series connection of four batteries 1.

### (Coupling mechanism 8)

In order for the plurality of battery blocks 3 to be firmly connected in a straight line without being out of position, mutually facing battery holders 2 are connected by means of coupling mechanisms 8 in illustrated core pack 9. Each of illustrated coupling mechanisms 8 includes connection boss 8A and connection tube 8B that are integral respectively with respective end walls 25 of battery holders 2. Connection boss 8A engages in connection tube 8B. End wall 25 of one of battery holders 2 to be connected to each other is formed with projecting connection boss 8A, while end wall 25 of the other of battery holders 2 is formed with connection tube 8B in which this connection boss 8A engages. Illustrated battery holders 2 are provided with coupling mechanisms 8 respectively at respective upper positions of ends of their mutually facing faces and a bottom position of an intermediate part of their mutually facing faces. When connected, battery holders 2 are positioned at three points. Therefore, battery holders 2 can be connected to each other at exactly the same positions to face each other.

Those two battery holders 2 illustrated have the same shape. Being structurally connectable to each other while having the same shape, the plurality of battery holders 2 can be formed using a single metal mold and therefore enable reduced manufacturing cost. Connection boss 8A and connection tube 8B disposed respectively on the left and right end faces of each of illustrated battery holders 2 face each other. In other words, connection boss 8A and connection tubes 8B are formed, in the drawing, on one of the end faces to correspond respectively to connection tube 8B and connection bosses 8A that are formed on the other end face. Coupling mechanisms 8 leave a predetermined space between mutually facing battery holders 2 when connecting battery holders 2 and thus can prevent, without fail, lead plates 3 connected to the mutually facing end faces of battery blocks 10 from accidentally short-circuiting or making contact with each other.

In illustrated battery pack 100, two battery holders 2 are connected to form core pack 9. However, battery holder 2 of the battery pack according to the present invention is not limited specifically to the above structure and may be any other structure that can hold the plurality of batteries in position. Moreover, core pack 9 is not limited specifically to the structure that connects two battery holders 2 and may be, for example, a structure that connects three or more battery holders.

### (Lead plates 3)

At the end faces of battery holders 2, lead plates 3 are fixed, by spot welding or the like, to batteries' electrode terminals 1x, 1y of batteries 1 exposed respectively by electrode windows 29 of end walls 25. Each of lead plates 3 is made by die-cutting a thin metal plate with superior conductivity and bending. Lead plates 3 are connected to electrode terminals 1x, 1y of the plurality of batteries 1 housed in each of battery holders 2 to connect these batteries 1 in series and parallel.

As illustrated in FIG. 4, lead plates 3 include bendable lead plates 3X that each connect mutually facing parallel units 11 in series between mutually facing battery blocks 10, flat lead plate 3Y that connects, at a left end face of left battery block 10 in the drawing, parallel units 11 of this battery block 10 in series, and end-face lead plates 3Z that are connected, at a right end face of right battery block 10 in the drawing, respectively to respective positive-output and negative-output end faces of the plurality of parallel units 11 that are connected in series. The battery pack according to the present invention is characteristic in that lead plate 3 which is bendable lead plate 3X connecting respective parallel units 11 of mutually facing battery blocks 10 in series has a distinctive structure. A detailed description is hereinafter provided of the structure of bendable lead plate 3X.

As illustrated in plan view by FIG. 5, lead plate 3 which is bendable lead plate 3X includes, at each of ends of turnback part 33, fixed pieces 31 that are connected respectively to electrode terminals 1x or 1y of batteries 1. Illustrated lead plate 3 includes flat part 32 at each end of turnback part 33 so as to connect two batteries 1 at each end of turnback part 33. Sides of each of flat parts 32 are connected to fixed pieces 31, respectively. At the end face of battery block 10, the pair of fixed pieces 31 of this lead plate 3 are connected respectively to respective electrode terminals 1x or 1y of two batteries 1 forming parallel unit 11, and these batteries 1 are connected in parallel via flat part 32. Parallel units 11 that are each composed of two batteries 1 which are connected in parallel via flat part 32 are connected in series via turnback part 33 of this lead plate 3.

Flat part 32 connecting with the end of turnback part 33 of lead plate 3 is connected to each fixed piece 31 via connective arm 34 which has a narrower lateral width than fixed piece 31. Lead plate 3 illustrated in FIG. 5 includes first flat part 32A connecting with one of the ends of turnback part 33, and second flat part 32B connecting with the other end of turnback part 33. First flat part 32A is connected via connective arm 34 to each of first fixed pieces 31A. Illustrated lead plate 3 has first fixed pieces 31A that are each connected via connective arm 34 to each of the sides of first flat part 32A. Illustrated second flat part 32B includes, on each of its sides, annular outer peripheral part 35 surrounding first fixed piece 31A. Space 36 is provided between this outer peripheral part 35 and first fixed piece 31A disposed within outer peripheral part 35, thereby separating first fixed piece 31A from outer peripheral part 35. Second flat part 32B is connected to each of second fixed pieces 31B without use of connective arm 34. Each side of second flat part 32B of illustrated lead plate 3 is connected directly to first fixed piece 31A. In illustrated battery pack 100, connective arm 34 is connected to negative electrode terminal 1y of battery 1. Therefore, each of first fixed pieces 31A is connected to the negative electrode terminal 1y of battery 1, while each of second fixed pieces 31B is connected to positive electrode terminal 1x of battery 1.

Each fixed piece 31 is connected to electrode terminal 1x, 1y of battery 1 by spot welding or laser welding. When connected to electrode terminal 1x, 1y of battery 1 by the spot welding, fixed piece 31 is disposed in electrode window 29 of end wall 25 of battery holder 2. In order for each fixed piece 31 that is disposed in electrode window 29 of end wall 25 to abut electrode terminal 1x, 1y, illustrated lead plate 3 to connect is stepped so that a welding part of each fixed piece 31 is recessed from flat part 32. In other words, fixed piece 31 of lead plate 3 is provided with step 31a between the welding part and flat part 32. By being provided with step 31a, inserted fixed piece 31 projects toward electrode terminal 1x, 1y in electrode window 29 of end wall 25 and is connected while touching electrode terminal 1x, 1y positioned in electrode window 29. In the welding part of illustrated fixed piece 31, a slit is provided to enable efficient welding to electrode terminal 1x, 1y with reactive current reduced.

Connective arm 34 is a slender crank-shaped metal sheet connecting first fixed piece 31A and first flat part 32A. Being the metal sheet having a narrower width and a long overall length, this connective arm 34 can have increased electrical resistance. Therefore, connective arm 34 of this lead plate 3 can serve as a fuse link that is thermally cut by overcurrent to protect battery pack 100 from the overcurrent. Illustrated connective arm 34 includes, as one of its ends, first end 34A connecting with first fixed piece 31A and includes, as its other end, second end 34B connecting with first flat part 32A. Compared with first end 34A, second end 34B connecting with first flat part 32A is distant from turnback part 33 of illustrated lead plate 3, and connective arm 34 is parallel to the sides of first flat part 32A. In this structure, connective arm 34 connects with first flat part 32A at the position distant from turnback part 33. Therefore, when turnback part 33 is bent in a bending process, excessive force that may be caused by reaction force acting on flat part 32 can be effectively prevented from acting on the connection between connective arm 34 and first flat part 32A. Consequently, slender connective arm 34 can be effectively prevented from breaking on impact or the like.

Connective arm 34 is disposed at a surface of end wall 25 of battery holder 2. This connective arm 34 is positioned to touch or come close to end wall 25 and thus is prevented by end wall 25 from being deformed or damaged. Step 31a is set so that connective arm 34 touches or comes close to end wall 25. In other words, step 31a is set so that with the welding part fixed to electrode terminal 1x, 1y, connective arm 34 touches or is in close proximity to end wall 25. Each connective arm 34 of this lead plate 3 can touch or be in close proximity to end wall 25 while the welding part is fixed to electrode terminal 1x, 1y. In each of battery holders 2 illustrated in FIG. 4, electrode window 29 in which fixed piece 31 connecting with connective arm 34 is disposed has an opening edge that includes a straight part. Connective arm 34 is disposed along this part of the opening edge.

It is to be noted that connective arm 34 of lead plate 3 of the battery pack is not limited particularly to the above-described shape and connection in the present invention and can be changed variously. The battery pack according to the present invention is particularly characteristic in that bending part 37 is provided so that turnback part 33 of lead plate 3 can be bent at this desired location with ease. Therefore, the width, the length, the shape, and others of the connective arm can be changed variously to function as the fuse link.

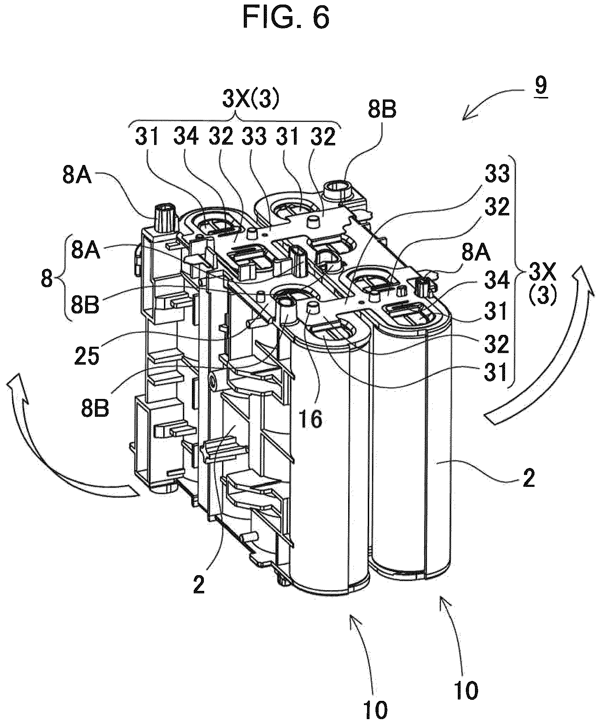

Turnback part 33 occupies the intermediate position between fixed pieces 31 that are connected respectively to respective electrode terminals 1x, 1y of mutually facing batteries 1 of battery blocks 10. After end-side fixed pieces 31 are connected respectively to batteries 1 of mutually facing battery blocks 10 with lead plate 3 spreading on a plane as illustrated in FIGS. 5 and 6, turnback part 33 is turned back at 180 degrees as illustrated in FIGS. 6 to 8. When turnback part 33 is bent in the bending process, internal stress caused to lead 3 causes force to act in opposite directions on flat part 32 and fixed piece 31. In other words, flat part 32 is urged in a direction away from the battery end face with respect to fixed piece 31 fixed to electrode terminal 1x, 1y. The internal stress that is caused to lead plate 3 when turnback part 33 is bent in the bending process can cause narrower connective arm 34 to break on fall impact or the like.

In order to reduce the internal stress that is caused to lead plate 3 when turnback part 33 is bent in the bending process, turnback part 33 of illustrated lead plate 3 includes bending part 37 that is the intentionally specified location for bending to easily take place. In this way, reduced reaction force is caused by the bending of lead plate 3. In FIG. 5, through hole 37A is provided in turnback part 33 of illustrated lead plate 3 to serve as bending part 37. Because of through hole 37A in turnback part 33 of this lead plate 3, turnback part 33 is effectively bent, in the bending process, along bending line 37L that crosses this through hole 37A. In FIG. 5, bending part 37 of illustrated lead plate 3 is provided along a boundary between turnback part 33 and flat part 32. In other words, through hole 37A is open near the boundary between turnback part 33 and flat part 32. This structure is smoothly bent along bending line 37L that runs along the boundary between turnback part 33 and flat part 32, so that reduced internal stress is caused to lead plate 3. Although illustrated lead plate 3 is provided with, in its central portion, single through hole 37 that serves as bending part 37, the lead plate may include, along a width of the turnback part, a plurality of through holes that serve as a bending part.

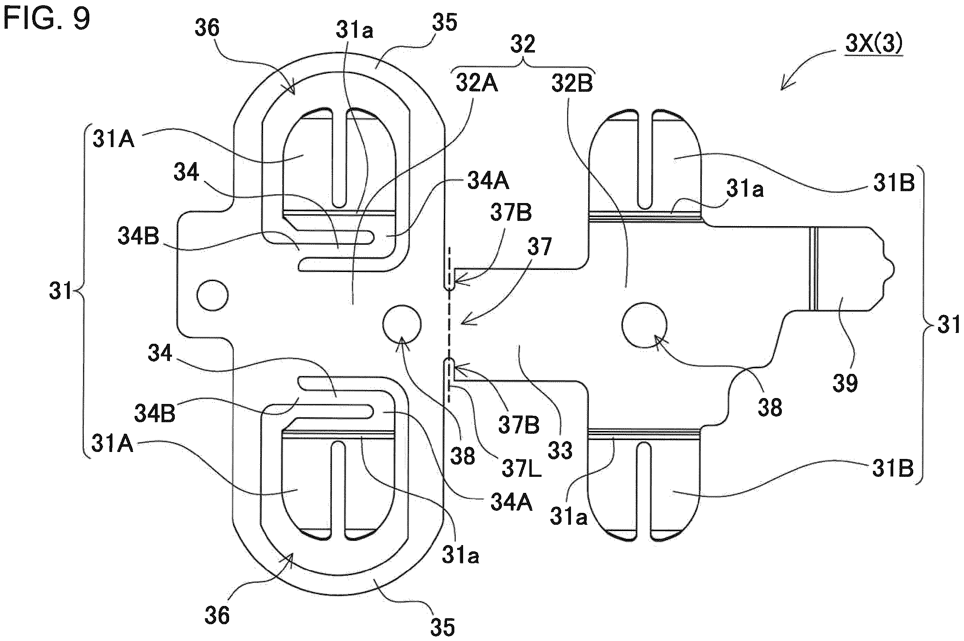

In FIG. 9, serving as bending part 37, notches 37B are provided respectively in sides of turnback part 33 of illustrated lead plate 3 so that the turnback part 33 has a narrower width. Lead plate 3 illustrated in FIG. 9 has these side notches 37B along a boundary between turnback part 33 and flat part 32. Illustrated notches 37B each extend from a side edge of turnback part 33 toward a middle of turnback part 33, thus causing turnback part 33 to partly have the narrower width. This lead plate 3 is effectively bent along bending line L that passes through notches 37B formed respectively in the sides of turnback part 33. The bending is particularly smooth because of bending line 37L that runs along the boundary between turnback part 33 and flat part 32, so that reduced internal stress is caused to lead plate 3.

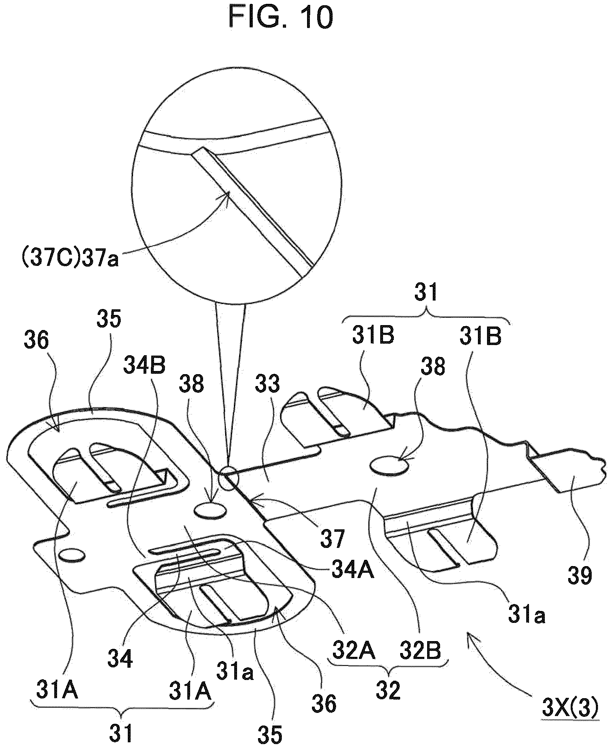

In FIG. 10, serving as a bending part, thinned part 37C is provided as a thinned part of turnback part 33 of illustrated lead plate 3. Lead plate 3 illustrated in FIG. 10 is provided with, as thinned part 37C, straight groove 37a that extends along a boundary between turnback part 33 and flat part 32, that is to say, along a width of turnback part 33. Thinned part 37C defined by groove 37a can be formed, for example, by pressing a specified location of turnback part 33. With straight groove 37a serving as bending line L, this lead plate 3 is effectively bent. The bending is particularly smooth because groove 37a extending along the boundary between turnback part 33 and flat part 32 serves as bending part 37. Therefore, reduced internal stress is caused to lead plate 3.

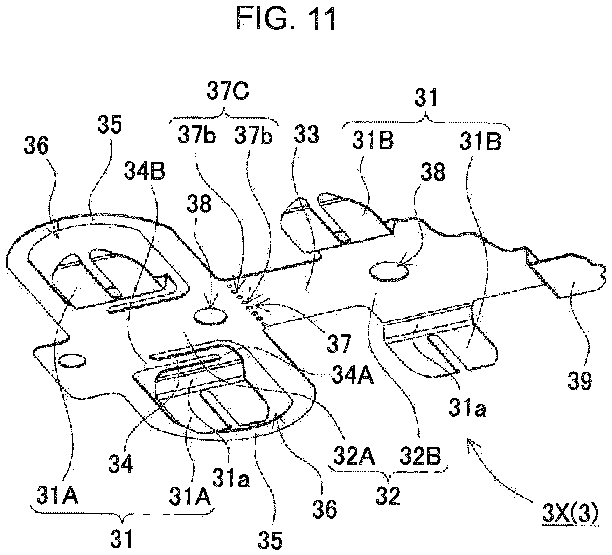

In FIG. 11, a plurality of recesses 37b are provided in turnback part 33 of illustrated lead plate 3 to form thinned part 37C that serves as a bending part. Lead plate 3 illustrated in FIG. 11 is provided with, as thinned part 37C, the plurality of recesses 37b along a boundary between turnback part 33 and flat part 32, that is to say, along a width of turnback part 33. Thinned part 37C defined by the plurality of recesses 37b can be formed, for example, by pressing specified locations of turnback part 33. This lead plate 3 is effectively bent along bending line 37L that crosses the plurality of recesses 37b formed on a straight line. The bending is particularly smooth because of bending line 37L that runs along the boundary between turnback part 33 and flat part 32, so that reduced internal stress is caused to lead plate 3.

Each of lead plates 3 illustrated in the above drawings includes positioning holes 38 respectively in flat parts 32. Positioning holes 38 each guide positioning pin 16 provided on end wall 25 so that lead plate 3 is disposed in place on end wall 25 of each of battery holders 2. Positioning pin 16 that is inserted in each positioning hole 38 is formed to project from end wall 25 of each battery holder 2. When positioning pins 16 are guided respectively in positioning holes 38, lead plate 3Y is disposed in place on the respective end faces of battery holders 2.

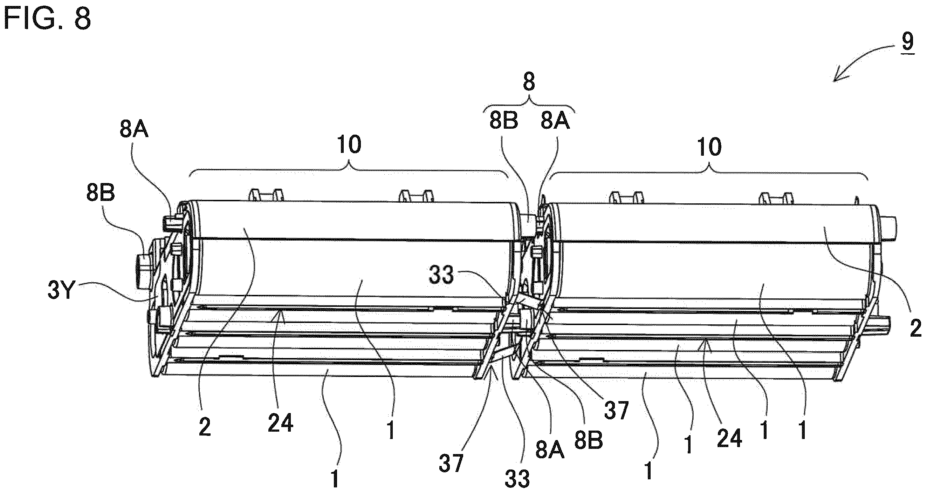

As illustrated in FIG. 6, above bendable lead plate 3X is connected to extend over adjacent battery holders 2, thereby connecting respective parallel units 11 of adjacent battery blocks 10 in series. With adjacent battery blocks 10 connected in a straight line as illustrated in FIG. 8, this bendable lead plate 3X is bent along bending part 37 of intermediate turnback part 33, and flat parts 32 face each other in parallel relation respectively at the ends of turnback part 33. Illustrated bendable lead plate 3X effects parallel connection of two batteries 1 of each of parallel units 11 by means of flat part 32 and effects series connection of two mutually facing parallel units 2 by means of turnback part 33.

Flat lead plate 3Y is disposed on the end face of battery holder 2 and connects adjacent parallel units 2 in series so that respective electrode terminals 1x, 1y of these adjacent parallel units 2 are connected on an identical plane. Illustrated flat lead plate 3Y effects parallel connection of two batteries 1 of each of parallel units 2 by means of flat part 32 and effects series connection of two adjacent parallel units 2.

As illustrated in FIG. 4, bendable lead plate 3X and flat lead plate 3Y each include connection terminal 39 at which a midpoint potential is detected. Connection terminal 39 projects from a side of flat part 32. As FIG. 4 illustrates, connection terminals 39 are extended out to reach respective upper faces of battery holders 2 that are connected in a straight line, and their respective leading ends project upward. The leading end of each of connection terminals 39 is connected to circuit board 7 disposed at the upper face of battery holder 2.

Disposed respectively at a positive-output and a negative-output end of core pack 9, end-face lead plates 3Z are each connected, for extraction of an output of core pack 9, to electrode terminals 1x or 1y positioned at an end of each of parallel units 11 that are connected in series. Each of end-face leads 3Z includes fixed pieces 31 connected respectively to ends of its flat part 32, connects the two batteries of parallel unit 11 in parallel and is connected to circuit board 7 via connection terminal 39 that projects from a side of flat part 32.

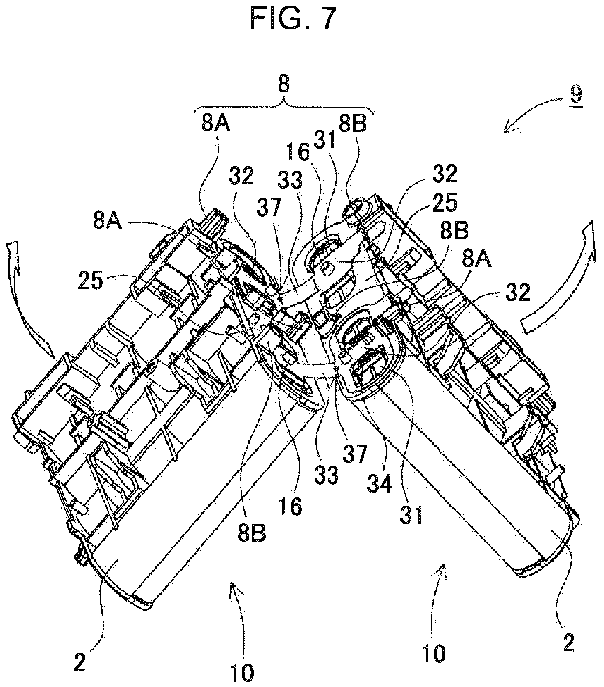

Two battery blocks 10 of above core pack 9 are connected in a straight line via bendable lead plates 3X. When bendable lead plates 3X each connecting left and right battery blocks 10 are bent by 180 degrees at their respective turnback parts 33 as illustrated in FIGS. 6 to 8, two battery blocks 10 of this core pack 9 are connected in a straight line. In FIG. 6, for example, two battery blocks 10 of the illustrated core pack that are to be connected by lead plates 3 are placed side by side so that their respective end faces that are to face each other are on an identical plane. Lead plates 3 spreading on a plane are disposed on those end faces of battery holders 2, so that fixed pieces 31 disposed at each of the ends of turnback part 33 can be efficiently spot-welded to respective end-face electrodes x, 1y of batteries 1. This battery pack 100 particularly enables a spot welding machine to perform efficient spot welding within a smaller stroke range because lead plates 3 that are disposed on the end faces can be spot-welded with two battery blocks 10 placed side by side. For this reason, an existing spot welding machine with a narrow stroke range can be effectively used for the spot welding without introduction of a spot welding machine with a larger stroke range. After all electrode terminals 1x, 1y exposed at mutually facing end walls 25 of two battery blocks 10 of core pack 9 are connected by lead plates 3, lead plates 3 are bent at their respective turnback parts 33. In other words, two battery blocks 10 are tilted as indicated by arrows in FIGS. 6 and 7 to bend turnback parts 33. Consequently, these two battery blocks 10 are connected in a straight line.

Above core pack 9 is assembled in the following manner.

### [Connection process]

(1) As illustrated in FIG. 6, two battery blocks 10 are placed side by side, each in a standing position so that batteries 1 are upright. In this state, electrode terminals 1x, 1y of the mutually facing battery blocks are disposed on an identical plane.
(2) Lead plates 3X are disposed on respective upper faces of battery blocks 10 in standing positions for the purpose of connecting battery blocks 10. Each of lead plates 3 is disposed with turnback part 33 and each of flat parts 32 that connect respectively with the ends of turnback part 33 being flat.
(3) As illustrated in FIG. 6, fixed pieces 31 of lead plates 3 disposed on those end faces of battery blocks 10 are each connected, by spot welding, to battery's electrode terminal 1x, 1y of the batteries 1 exposed by electrode window 29 of end wall 25.

### [Bending process]

(4) With their respective end faces connected to lead plates 3, two battery blocks 10 are expanded, changing from their FIG. 6 standing positions to a horizontal position so that those end faces face each other. The turnback part of each of the lead plates is bent here with the fixed pieces fixed respectively to the electrode terminals so that connection of the two battery blocks is such that the batteries' respective electrode terminals connected via each of the lead plates face each other. In other words, with the bending part of the turnback part being their middle, the two battery blocks placed side by side are expanded in such a manner that their respective lower end faces are separated from each other as illustrated in FIG. 7 until two battery blocks 10 are spread on a plane as illustrated in FIG. 8.
(5) Connection boss 8A projecting from end wall 25 of each of battery holders 2 is engaged in counter connection tube 8B, so that battery blocks 10 are connected without being out of position while facing each other.
(6) As illustrated in FIG. 8, two battery blocks 10 connected in a straight line in the above state thus become core pack 9.

### (Insulating sheet 17)

In illustrated battery pack 100, insulating sheets 17 are affixed respectively to end faces of core pack 9 to prevent lead plates 3 from accidentally short-circuiting. Available examples of insulating sheet 17 include those with superior insulation properties, such as paper and plastic films. An outline of each of illustrated insulating sheets 17 corresponds to the end face of battery holder 2, so that lead plate 3 connected to that end face of battery holder 2 can be covered entirely.

### (Exterior case 4)

Including battery holders 2 in which the plurality of batteries 1 are disposed in place, battery core pack 9 is housed in exterior case 4. Exterior case 4 illustrated in FIGS. 1 to 3 divides into first case 4A and second case 4B and is internally formed with a storage space for core pack 9. This exterior case 4 is also made by molding an insulating resin such as a thermoplastic resin into a predetermined shape. Exterior case 4 may also be made preferably of a resin that has superior flame retardancy, such as PC or PP.

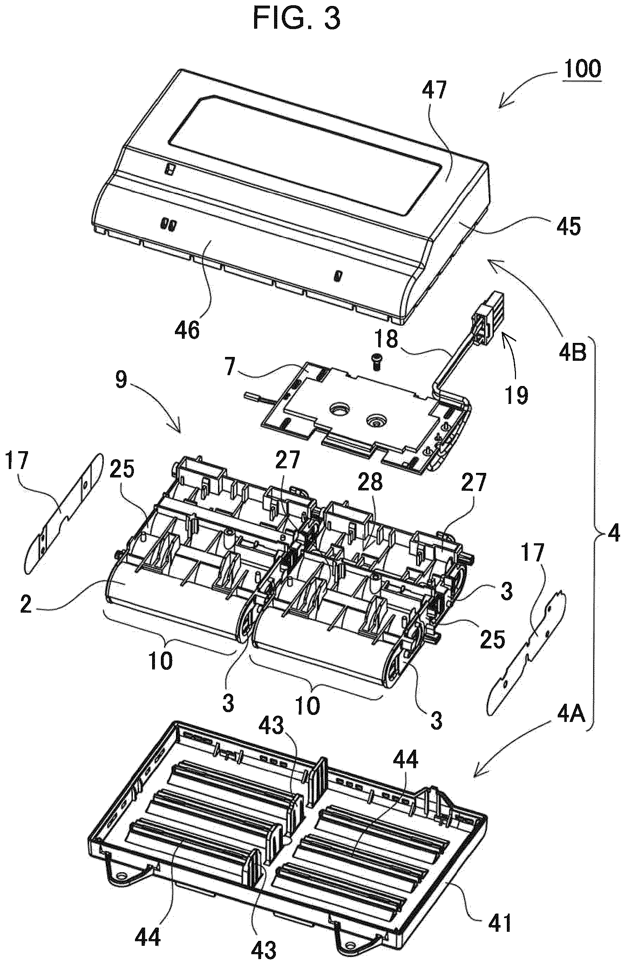

First case 4A includes, along a periphery of its bottom plate, outer peripheral wall 41 connecting with the bottom plate and thus has the shape of a box with an upper opening. Outer peripheral wall 41 of illustrated first case 4A has an inside shape and a depth that allow a lower part of battery core pack 9 to be housed. As illustrated in FIGS. 2 and 3, first case 4A also includes the plurality of connection ridges 44 that are positioned to each face partition walls 22 of housed battery holder 2. The plurality of connection ridges 44 extend along lengths of batteries 1 and project upward from a bottom of first case 4A. As illustrated in FIG. 2, each battery holder 2 includes three connection grooves 24 among four battery storage spaces 20. Therefore, first case 4A includes three connection ridges 44 on each of its left and right sides.

As FIG. 3 illustrates, first case 4A also includes, between left and right battery blocks 10, a plurality of division walls 43 separated from one another in a front to rear direction. The plurality of division walls 43 are each positioned between left and right connection ridges 44. Four division walls 43 provided to illustrated first case 4A form a straight line. Each of division walls 43 is inserted between left and right battery blocks 10 to protectively separate those parts of lead plate 3 that are connected respectively to mutually facing batteries 1.

Second case 4B includes, along a periphery of its top plate, outer peripheral wall 45 connecting with the top plate and thus has the shape of a box with a lower opening so as to close the upper opening of box-shaped first case 4A. Outer peripheral wall 45 of illustrated second case 4B has an inside shape and a depth that allow an upper part of core pack 9 received by first case 4A to be housed.

First case 4A and second case 4B of above exterior case 4 illustrated in FIGS. 2 and 3 are connected to each other with battery core pack 9 housed between first case 4A and second case 4B. Respective outer peripheral walls 41, 45 of first and second cases 4A and 4B are connected in face-to-face relation, so that core pack 9 is disposed inside. Outer peripheral walls 41, 45 of first and second cases 4A and 4B of exterior case 4 are connected together at their respective end faces by ultrasonic welding or bonding. Although not illustrated, set screws may be passed through one of the first and second cases and may be screwed respectively into bosses provided to the other case to connect the first and second cases.

### (Circuit board 7)

Exterior case 4 of battery pack 100 illustrated in FIGS. 2 and 3 houses circuit board 7 in addition to battery core pack 9. Illustrated battery pack 100 includes, near the upper face of battery holder 2, storage space 28 for circuit board 7. Illustrated battery holder 2 includes a plurality of upwardly projecting supports 27, and a space is provided, as storage space 28 for circuit board 7, between respective upper surfaces of curved plates 21 of battery holder 2 and an inner surface of second case 4B. Rear part 47 of exterior case 4 illustrated in FIG. 2 is formed to have a greater height than front part 46 of exterior case 4, and it is rear part 47 that is internally formed with storage space 28 for circuit board 7.

Circuit board 7 can be mounted with electronic components including a protection circuit. The protection circuit may include a detection circuit that detects, for example, a voltage, a remaining capacity, and a temperature of each of the cylindrical batteries, and switching elements that are each switched on or off on the basis of data on each battery 1 that is detected by the detection circuit. Battery pack 100 housing circuit board 7 includes output connector 19 that is connected to circuit board 7 via lead wire 18, which is routed out of exterior case 4. Output connector 19 includes an output terminal and a signal terminal. The output terminal is used for charge and discharge, while the signal terminal is used for communication with a connected device. However, instead of the output connector, connection terminals including an output terminal and a signal terminal may be fixed to the circuit board of the battery pack and may be shown exposed by the exterior case for external connection.

### INDUSTRIAL APPLICABILITY

The present invention can be effectively used as a battery pack including a plurality of batteries that are each connected via a lead plate which includes a turnback part.

### REFERENCE MARKS IN THE DRAWINGS

100: battery pack
1: battery
1x, 1y: electrode terminal
2: battery holder
3: lead plate
3X: bendable lead plate
3Y: flat lead plate
3Z: end-face lead plate
4: exterior case
4A: first case
4B: second case
7: circuit board
8: coupling mechanism
8A: connection boss
8B: connection tube
9 : core pack
10: battery block
11: parallel unit
16: positioning pin
17: insulating sheet
18: lead wire
19: output connector
20: battery storage space
21: curved plate
22: partition wall
23: connective part
24: connection groove
25: end wall
27: projecting support
28: storage space
29: electrode window
31: fixed piece
31A: first fixed piece
31B: second fixed piece
31a: step
32: flat part
32A: first flat part
32B: second flat part
33: turnback part
34: connective arm
34A: first end
34B: second end
35: outer peripheral part
36: space
37: bending part
37A: through hole
37B: notch
37C: thinned part
37a: groove
37b: recess
37L: bending line
38: positioning hole
39: connection terminal
41: outer peripheral wall
43: division wall
44: connection ridge
45: outer peripheral wall
46: front part
47: rear part
103: lead plate
131: fixed piece
133: turnback part

## Claims

1. A battery pack comprising:
a plurality of batteries (1) including respective electrode terminals (1x, 1y) disposed in face-to-face relation; and
a lead plate (3) connecting each of the plurality of batteries (1), the lead plate (3) including a turnback part (33) and fixed pieces (31) connected to the electrode terminals (1x, 1y),
wherein the lead plate (3) further includes:
a flat part (32) at each of ends of the turnback part (33); and
a connective arm (34) connecting the flat part (32) and at least one of the fixed pieces (31), the connective arm (34) having a narrower width than a width of the at least one of the fixed pieces (31),
the lead plate (3) including:
a first flat part (32A) that connects as one of the flat parts (32) with one of the ends of the turnback part (33); and
a second flat part (32B) that connects as another of the flat parts (32) with another of the ends of the turnback part (33),
each of sides of the first flat part (32A) is connected to a first fixed piece (31A) of the fixed pieces (31) via the connective arm (34), and
each of sides of the second flat part (32B) is connected to a second fixed piece (31B) of the fixed pieces (31) without the use of the connective arm (34),
the connective arm (34) including :
a first end (34A) connecting with the first fixed piece (31A); and
a second end (34B) connecting with the first flat part (32A), and
the second end (34B) connecting with the first flat part (32A) is distant from the turnback part (33) compared with the first end (34A), with the connective arm (34) paralleling a side of the flat part (32);
the turnback part (33) includes a bending part (37),
the bending part (37) is provided at a boundary between the turnback part (33) and the first flat part (32A), and
the bending part (37) includes any one of a through hole (37A) provided in the turnback part (33),
a side notch (37B) where the turnback part (33) has a narrowed width, and
a thinned part (37C) that is a thinned part of the turnback part (33).

2. The battery pack according to claim 1, wherein the connective arm (34) is a fuse link.

3. A method for manufacturing a battery pack, the method comprising:
fixing, to an electrode terminal of each of batteries (1) that are disposed to have the respective electrode terminals (1x, 1y) on an identical plane, a fixed piece (31) that is connected to a flat part (32) connecting with each of ends of a turnback part (33) of a lead plate (3), with the turnback part (33) being not bent and forming a flat surface with the flat part (32); and
bending the turnback part (33) of the lead plate (3) with the fixed piece (31) fixed to the electrode terminal of each of the batteries (1) to a position where the electrode terminals (1x, 1y) of the batteries (1) that are connected to each other via the lead plate (3) are disposed in face-to-face relation,
wherein the lead plate (3) includes:
a first flat part (32A) that connects as one of the flat parts (32) with one of the ends of the turnback part (33); and
a second flat part (32B) that connects as another of the flat parts (32) with another of the ends of the turnback part (33),
each of sides of the first flat part (32A) is connected to a first fixed piece (31A) of the fixed pieces (31) via the connective arm (34), and
each of sides of the second flat part (32B) is connected to a second fixed piece (31B) of the fixed pieces (31) without the use of the connective arm (34),
wherein the connective arm (34) includes :
a first end (34A) connecting with the first fixed piece (31A); and
a second end (34B) connecting with the first flat part (32A), and
the second end (34B) connecting with the first flat part (32A) is distant from the turnback part (33) compared with the first end (34A), with the connective arm (34) paralleling a side of the flat part (32), and
wherein the turnback part (33) of the lead plate (3) includes a bending part (37) provided at a boundary between the turnback part (33) and the first flat part (32A), and
a metal plate to use as the lead plate (3) includes, as the bending part (37), any one of a through hole (37A) provided in the turnback part (33), a side notch (37B) where the turnback part (33) has a narrowed width, and a thinned part (37C) that is a thinned part of the turnback part (33).

## Patentansprüche

1. Batteriepack umfassend:
eine Vielzahl von Batterien (1) mit jeweiligen Elektrodenanschlüssen (1x, 1y), die einander gegenüberliegend angeordnet sind; und
eine Leitungsplatte (3), die jede der Vielzahl von Batterien (1) verbindet, wobei die Leitungsplatte (3) einen Umschlagteil (33) und feststehende Teile (31) aufweist, die mit den Elektrodenanschlüssen (1x, 1y) verbunden sind,
wobei die Leitungsplatte (3) ferner Folgendes umfasst:
einen flachen Teil (32) an jedem der Enden des Umschlagteils (33); und
einen Verbindungsarm (34), der den flachen Teil (32) und wenigstens eines der feststehenden Teile (31) verbindet, wobei der Verbindungsarm (34) eine geringere Breite als eine Breite des mindestens einen der feststehenden Teile (31) aufweist,
wobei die Leitungsplatte (3) Folgendes umfasst:
einen ersten flachen Teil (32A), der als einer der flachen Teile (32) mit einem der Enden des Umschlagteils (33) verbunden ist; und
einen zweiten flachen Teil (32B), der als ein weiterer der flachen Teile (32) mit einem weiteren der Enden des Umschlagteils (33) verbunden ist,
wobei jede der Seiten des ersten flachen Teils (32A) über den Verbindungsarm (34) mit einem ersten feststehenden Teil (31A) der feststehenden Teile (31) verbunden ist, und
wobei jede der Seiten des zweiten flachen Teils (32B) mit einem zweiten feststehenden Teil (31B) der feststehenden Teile (31) ohne Verwendung des Verbindungsarms (34) verbunden ist,
wobei der Verbindungsarm (34) Folgendes umfasst:
ein erstes Ende (34A), das mit dem ersten feststehenden Teil (31A) verbunden ist; und
ein zweites Ende (34B), das mit dem ersten flachen Teil (32A) verbunden ist, und
wobei das zweite Ende (34B), das mit dem ersten flachen Teil (32A) verbunden ist, im Vergleich zum ersten Ende (34A) vom Umschlagteil (33) entfernt ist, wobei der Verbindungsarm (34) parallel zu einer Seite des flachen Teils (32) verläuft;
wobei der Umschlagteil (33) einen Biegeteil (37) umfasst,
wobei der Biegeteil (37) an einer Grenze zwischen dem Umschlagteil (33) und dem ersten flachen Teil (32A) vorgesehen ist, und
wobei der Biegeteil (37) ein beliebiges von einem Durchgangsloch (37A) umfasst, das in dem Umkehrteil (33) vorgesehen ist,
einer seitlichen Kerbe (37B), bei der der Umschlagteil(33) eine verringerte Breite aufweist, und
einem verschmälerten Teil (37C), der ein verschmälerter Teil des Umschlagteils (33) ist.

2. Batteriepack nach Anspruch 1, wobei der Verbindungsarm (34) eine Sicherungsverbindung ist.

3. Verfahren zur Herstellung eines Batteriepacks, wobei das Verfahren umfasst:
Befestigen, an einem Elektrodenanschluss von jeder der Batterien (1), die so angeordnet sind, dass sie die jeweiligen Elektrodenanschlüsse (1x, 1y) auf einer identischen Ebene haben, eines feststehenden Teils (31), das mit einem flachen Teil (32) verbunden ist, der mit jedem der Enden eines Umschlagteils (33) einer Leitungsplatte (3) verbunden ist, wobei der Umschlagteil (33) nicht gebogen ist und eine flache Fläche mit dem flachen Teil (32) bildet; und
Biegen des Umschlagteils (33) der Leitungsplatte (3), wobei das feststehende Teil (31) an dem Elektrodenanschluss jeder der Batterien (1) befestigt ist, in eine Position, in der die Elektrodenanschlüsse (1x, 1y) der Batterien (1), die über die Leitungsplatte (3) miteinander verbunden sind, einander gegenüberliegend angeordnet sind,
wobei die Leitungsplatte (3) Folgendes umfasst:
einen ersten flachen Teil (32A), der als einer der flachen Teile (32) mit einem der Enden des Umschlagteils (33) verbunden ist; und
einen zweiten flachen Teil (32B), der als ein weiterer der flachen Teile (32) mit einem weiteren der Enden des Umschlagteils (33) verbunden ist,
wobei jede der Seiten des ersten flachen Teils (32A) über den Verbindungsarm (34) mit einem ersten feststehenden Teil (31A) der feststehenden Teile (31) verbunden ist, und
wobei jede der Seiten des zweiten flachen Teils (32B) mit einem zweiten feststehenden Teil (31B) der feststehenden Teile (31) ohne Verwendung des Verbindungsarms (34) verbunden ist,
wobei der Verbindungsarm (34) Folgendes umfasst:
ein erstes Ende (34A), das mit dem ersten feststehenden Teil (31A) verbunden ist; und
ein zweites Ende (34B), das mit dem ersten flachen Teil (32A) verbunden ist, und
wobei das zweite Ende (34B), das mit dem ersten flachen Teil (32A) verbunden ist, im Vergleich zum ersten Ende (34A) vom Umschlagteil (33) entfernt ist, wobei der Verbindungsarm (34) parallel zu einer Seite des flachen Teils (32) verläuft, und
wobei der Umschlagteil (33) der Leitungsplatte (3) einen Biegeteil (37) umfasst, der an einer Grenze zwischen dem Umschlagteil (33) und dem ersten flachen Teil (32A) vorgesehen ist, und
wobei eine Metallplatte, die als die Leitungsplatte (3) zu verwenden ist, als Biegeteil (37) ein beliebiges von einem Durchgangsloch (37A), das in dem Umschlagteil (33) vorgesehen ist, einer seitlichen Kerbe (37B), bei der der Umschlagteil (33) eine verringerte Breite aufweist, und einem verschmälerten Teil (37C), der ein verschmälerter Teil des Umschlagteils (33) ist, umfasst.

## Revendications

1. Bloc-batterie comprenant :
une pluralité de batteries (1) comprenant des bornes d'électrode (1x, 1y) respectives disposées en relation face à face ; et
une plaque conductrice (3) raccordant chacune de la pluralité de batteries (1), la plaque conductrice (3) comprenant une partie de retour (33) et des pièces fixes (31) raccordées aux bornes d'électrode (1x, 1y),
dans lequel la plaque conductrice (3) comprend en outre :
une partie plate (32) à chacune des extrémités de la partie de retour (33) ; et
un bras de raccordement (34) raccordant la partie plate (32) et au moins l'une des pièces fixes (31), le bras de raccordement (34) ayant une largeur plus étroite qu'une largeur d'au moins l'une des pièces fixes (31),
la plaque conductrice (3) comprenant :
une première partie plate (32A) qui se raccorde en tant que l'une des parties plates (32) avec l'une des extrémités de la partie de retour (33) ; et
une seconde partie plaque (32B) qui se raccorde en tant qu'autre des parties plates (32) avec une autre des extrémités de la partie de retour (33),
chacun des côtés de la première partie plate (32A) est raccordé à une première pièce fixe (31A) des pièces fixes (31) via le bras de raccordement (34), et
chacun des côtés de la seconde partie plate (32B) est raccordé à une seconde pièce fixe (31B) des pièces fixes (31) sans utiliser le bras de raccordement (34),
le bras de raccordement (34) comprenant :
une première extrémité (34A) se raccordant avec la première pièce fixe (31A) ; et
une seconde extrémité (34B) se raccordant avec la première partie plate (32A), et
la seconde extrémité (34B) se raccordant avec la première partie plate (32A) est distante de la partie de retour (33) par rapport à la première extrémité (34A), avec le bras de raccordement (34) qui est parallèle à un côté de la partie plate (32) ;
la partie de retour (33) comprend une partie flexible (37) ;
la partie flexible (37) est prévue au niveau d'une limite entre la partie de retour (33) et la première partie plate (32A), et
la partie flexible (37) comprend l'un quelconque d'un trou débouchant (37A) prévu dans la partie de retour (33),
une encoche latérale (37B) dans laquelle la partie de retour (33) a une largeur rétrécie, et
une partie affinée (37C) qui est une partie affinée de la partie de retour (33).

2. Bloc-batterie selon la revendication 1, dans lequel la bras de raccordement (34) est une liaison fusible.

3. Procédé pour fabriquer un bloc-batterie, le procédé comprenant les étapes suivantes :
fixer, à une borne d'électrode de chacune des batteries (1) qui sont disposées pour avoir les bornes d'électrode (1x, 1y) respectives sur un plan identique, une pièce fixe (31) qui est raccordée à une partie plate (32) se raccordant avec chacune des extrémités d'une partie de retour (33) d'une plaque conductrice (3), avec la partie de retour (33) qui n'est pas pliée et qui forme une surface plate avec la partie plate (32) ; et
plier la partie de retour (33) de la plaque conductrice (3) avec la pièce fixe (31) fixée sur la borne d'électrode de chacune des batteries (1) dans une position dans laquelle les bornes d'électrode (1x, 1y) des batteries (1) qui sont raccordées entre elles via la plaque conductrice (3), sont disposées en relation face à face,
dans lequel la plaque conductrice (3) comprend :
une première partie plate (32A) qui se raccorde en tant que l'une des parties plates (32) avec l'une des extrémités de la partie de retour (33) ; et
une seconde partie plate (32B) qui se raccorde en tant qu'autre des parties plates (32) avec une autre des extrémités de la partie de retour (33),
chacun des côtés de la première partie plate (32A) est raccordé à une première pièce fixe (31A) des pièces fixes (31) via le bras de raccordement (34), et
chacun des côtés de la seconde partie plate (32B) est raccordé à une seconde pièce fixe (31B) des pièces fixes (31) sans utiliser le bras de raccordement (34),
dans lequel le bras de raccordement (34) comprend :
une première extrémité (34A) se raccordant avec la première pièce fixe (31A) ; et
une seconde extrémité (34B) se raccordant avec la première partie plate (32A), et
la seconde extrémité (34B) se raccordant avec la première partie plate (32A) est distante de la partie de retour (33) par rapport à la première extrémité (34A), avec le bras de raccordement (34) qui est parallèle à un côté de la partie plate (32), et
dans lequel la partie de retour (33) de la plaque conductrice (3) comprend une partie flexible (37) prévue à une limite entre la partie de retour (33) et la première partie plate (32A), et
une plaque métallique destinée à être utilisée en tant que plaque conductrice (3) comprend, en tant que partie flexible (37), l'un quelconque d'un trou débouchant (37A) prévu dans la partie de retour (33), une encoche latérale (37B) où la partie de retour (33) a une largeur rétrécie et une partie affinée (37C) qui est une partie affinée de la partie de retour (33).
